# EUROPEAN PATENT SPECIFICATION

(11) **EP 0 567 919 B1**
(45) Date of publication and mention of the grant of the patent: **27.03.1996**
(21) Application number: 93106477.8
(22) Date of filing: 21.04.1993
(51) Int. Cl.: C08L 63/00, C08L 61/06

(54) **Epoxy resin composition and resin-encapsulated semiconductor device**
Epoxidharzzusammensetzung und Kunststoffumhüllte Halbleiteranordnung
Composition de résine époxyde et dispositif semi-conducteur encapsulé dans une résine

(30) Priority: 30.04.1992 JP 111273/92
(43) Date of publication of application: 03.11.1993
(73) Proprietor: SUMITOMO CHEMICAL COMPANY, LIMITED, Osaka (JP)
(72) Inventor: Shiomi, Yutaka, Tsukuba-shi, Ibaraki-ken (JP); Kamio, Kunimasa, Toride-shi (JP); Sugiyama, Yasuhide, Tsukuba-shi (JP); Saito, Noriaki, Tsukuba-shi (JP); Morimoto, Takashi, Tsukuba-shi (JP)
(74) Representative: Henkel, Feiler, Hänzel & Partner

(56) References cited:
- EP-A- 0 536 749
- US-A- 1 873 849
- US-A- 2 844 553
- PATENT ABSTRACTS OF JAPAN vol. 016, no. 126 (C-0923)31 March 1992 & JP-A-03 292 322 (SUMITOMO DUREZCO) 24 December 1991

## Description

### Field of the Invention

The present invention relates to an epoxy resin and an epoxy resin composition useful for encapsulating electronic parts, and to a resin-encapsulated semiconductor device with the epoxy resin composition.

### Description of the Related Art

Recently, semiconductors such as LSIs, ICs, transistors and the like have been encapsulated by transfer molding with epoxy resins which are economically advantageous.

Particularly, mounting of LSIs have been recently conducted by a surface mounting technology, so that a process of immersing them directly into a solder bath has been increasingly employed. During the immersion, the encapsulating materials are exposed to high temperatures of 200 °C or more to cause expansion of the moisture which has been hygroscopically sorbed in the encapsulating materials, and therefore, there have been problems of generation of cracks and separation at the interfacial region between the encapsulating materials and the diepads.

For this reason, the encapsulating resin materials are required to have improved resistance to cracking and adhesiveness, much less hygroscopicity and higher adhesiveness. Currently the most popular encapsulating materials are those using a glycidyl ether of o-cresol novolak as epoxy resin and a phenol novolak as curing agent. They are marketed practically in the wrapped form with moisture-proof wraps because of the above problems and put into use instantly removed from the wraps.

The encapsulating materials comprising mainly glycidyl ethers of o-cresol novolak and phenol novolaks have a sort of balance between heat resistance and hygroscopicity, but are not sufficient for use in such applications as requiring a high level of non-hygroscopicity as described above and also insufficient in adhesiveness, causing problems of solder cracking. In view of the aforementioned circumstances, the present inventors have made an intensive research on an epoxy resin composition having a good balance between the heat-resistance and the curability, and as a result, found a composition with a specific polyhydric phenol as epoxy curing agent which meets our objects. The present invention was completed based on the finding.

### SUMMARY OF THE INVENTION

The present invention provides an epoxy resin composition and a resin-encapsulated semiconductor device produced by encapsulating semiconductor devices with the same epoxy resin composition, characterized in that said epoxy resin composition comprises (a) an epoxy resin having at least two of epoxy groups in a molecule and (b) a polyhydric phenol represented by the general formula: 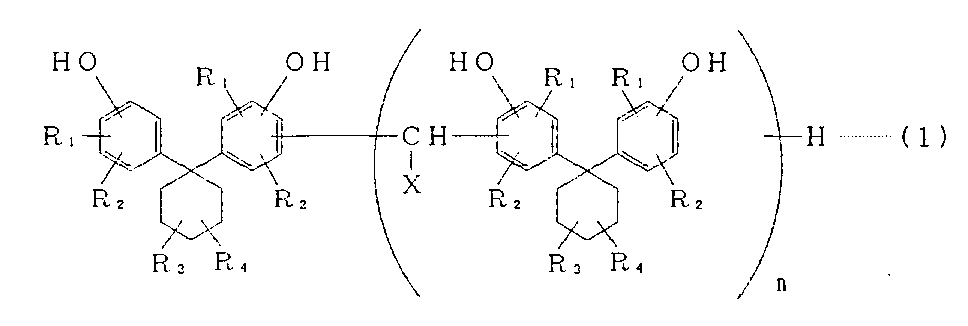 wherein R₁ to R₄ independently represent hydrogen, an alkyl group having 1 to 9 carbon atoms, a cycloalkyl group having 4 to 9 carbon atoms, or halogen, and X represents hydrogen, an alkyl group having 1 to 9 carbon atoms, cyclohexyl or an aryl group having 6 to 20 carbon atoms, and n represents an average number of repeating units of 0.1 to 10.

### DETAILED DESCRIPTION OF PREFERRED EMBODIMENTS

The substituents R₁ to R₄ contained in the polyhydric phenol represented by the general formula (1) to be used as the component (b) in the present invention include hydrogen, methyl, ethyl, propyl, butyl, amyl, hexyl, cyclohexyl, heptyl, octyl and nonyl groups, chlorine and bromine atoms, including various isomers thereof.

The substituent X includes hydrogen, methyl, ethyl, propyl, butyl, amyl, hexyl, cyclohexyl, heptyl, octyl, nonyl, phenyl and naphtyl groups, including various isomers thereof.

The average number of repeating units, n, is 0.1 to 10, preferably 0.1 to 5. The n higher than 10 results undesirably in poor workability due to too high viscosity.

Polyhydric phenols to be used in the present invention can be produced by condensation of a bisphenol represented by the general formula (2): 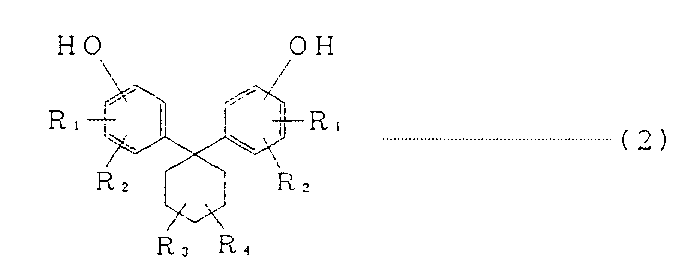 wherein R₁ to R₄ are the same as those defined for the general formula (1), and an aldehyde represented by the general formula (3): 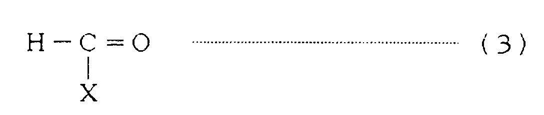 wherein X is the same as that defined for the general formula (1), in the presence of an acidic catalyst.

The polyhydric phenol to be used in the present invention may be produced by one of known methods comprising condensing an aldehyde as described above with a bisphenol as described above in the presence of an acidic catalyst such as an inorganic acid such as hydrogen chloride and sulfuric acid, an organic acid such as acetic acid, p-toluene sulfonic acid, thioglycollic acid, or a Lewis acid.

Bisphenols, the starting materials for polyhydric phenols to be used in the present invention may be produced by any one of known methods comprising condensing a cyclohexanone as defined below with a phenol as defined below in an amount by mole at least two times the amount of the cyclohexanone in the presence of an acidic catalyst such as an inorganic acid such as hydrogen chloride and sulfuric acid, an organic acid such as acetic acid, p-toluene sulfonic acid, thioglycollic acid, or a Lewis acid, washing with water, distilling out unreacted phenols, and if necessary, conducting post-treatment such as recrystallization from poor solvent. In the process, phenols may be left in the bisphenols to such an extent as not diminishing the effects of the present invention.

Exemplary phenols include phenol, cresol, ethyl phenol, propyl phenol, butyl phenol, amyl phenol, hexyl phenol, cyclohexyl phenol, octyl phenol, nonyl phenol, xylenol, methylbutyl phenol, chlorophenol, bromophenol, dichlorophenol, and dibromophenol, including various isomers thereof. The phenols may be substituted with halogens such as chlorine and bromine for the purpose of imparting flame retarding property to the phenols. These phenols may be used as alone as well as in a mixture of two or more thereof.

Exemplary cyclohexanones include cyclohexanone, mono-, or di-alkyl cyclohexanone. The alkyl group includes those having 1 to 9 carbon atoms.

Exemplary aldehydes represented by the general formula (3) to be used in the present invention include formaldehyde, acetaldehyde, butylaldehyde, benzaldehyde, naphthaldehyde, and the like.

The epoxy resin, the component (a) to be used in the composition according to the present invention may be any one of known epoxy resins. Exemplary epoxy resins include novolak epoxy resins such as the reaction products of a phenol such as phenol, o-cresol or the like with a formaldehyde; glycidyl ether compounds derived from tri- or higher valent phenols such as phloroglucin, tris-(4-hydroxyphenyl)-methane, 1,1,2,2-tetrakis(4-hydroxyphenyl)ethane and the like; glycidyl ether compounds derived from divalent phenols such as bisphenol A, bisphenol F, hydroquinone, resorcin and the like, or halogenated bisphenols such as tetrabromobisphenol A, and the like; glycidyl ether compounds of polyhydric phenols produced by condensation of phenols with aromatic carbonyl compounds; amine based epoxy resins derived from p-aminophenol, m-aminophenol, 4-amino-m-cresol, 6-amino-m-cresol, 4,4'-diaminodiphenyl methane, 3,3'-diaminodiphenyl methane, 4,4'-diaminodiphenyl ether, 3,4'-diaminodiphenyl ether, 1,4-bis(4-aminophenoxy)benzene, 1,4-bis(3-aminophenoxy)benzene, 1,3-bis(4-aminophenoxy)benzene, 1,3-bis(3-aminophenoxy)benzene, 2,2-bis(4-aminophenoxyphenyl)propane, p-phenylene diamine, m-phenylene diamine, 2,4-toluene diamine, 2,6-toluene diamine, p-xylylene diamine, m-xylylene diamine, 1,4-cyclohexane-bis(methylamine), 1,3-cyclohexane-bis(methylamine) and the like; glycidyl ester compounds derived from aromatic carboxylic acids such as p-oxybenzoic acid, m-oxybenzoic acid, terephthalic acid, isophthalic acid; hydantoic epoxy compounds derived from 5,5-dimethyl hydantoin, and the like; alicyclic epoxy resins of 2,2-bis(3,4-epoxycyclohexyl)propane, 2,2-bis[4-(2,3-epoxypropyl)cyclohexyl]propane, vinylcyclohexene dioxide, 3,4-epoxycyclohexylmethyl-3,4-epoxycyclohexane carboxylate, and the like; N,N-diglycidyl aniline. One or two or more of these epoxy resins may be used. Among them, o-cresol novolak epoxy resins and glycidyl ethers of polyhydric phenols obtained by condensation reaction of phenols with aromatic carbonyl compounds are preferred for application as encapsulating materials in view of the curability and a moisture resistance.

In the composition of the present invention, ordinary curing agents for epoxy resins may be used in combination with the component (b), polyhydric phenols. Exemplary curing agents include polyphenol compounds such as phenol novolak resins which are the reaction products of formaldehyde with phenols such as bisphenol A, tetrabromobisphenol A, bisphenol F, bisphenol S, bis(4-hydroxyphenyl)cyclohexane, bis(4-hydroxyphenyl)ethane, 1,3,3-trimethyl-1-m-hydroxyphenylindane-5 or 7-ol, 1,3,3-trimethyl-1-p-hydroxyphenylindane-6-ol, resorcin, hydroquinone, catechol, phenol, o-cresol, and the like; polycarboxylic acids and anhydrides thereof such as maleic acid, phthalic acid, nadic acid, methyl-tetrahydrophthalic acid, methylnadic acid, and the like; polyamine compounds such as diaminodiphenyl methane, diaminodiphenyl sulfon, diaminodiphenyl ether, phenylene diamine, diaminodicyclohexyl methane, xylylene diamine, toluene diamine, diaminodicyclohexane, dichloro-diaminodiphenyl methane, (including isomers thereof), ethylene diamine, hexamethylene diamine, and the like; and compounds having active hydrogen reactive with epoxy group such as dicyandiamide, tetramethyl guanidine, and the like. Among them, phenol novolak resins are preferred in view of curability.

With respect to the proportion of the polyhydric phenols to the epoxy resins to be incorporated in the composition of the present invention, the amount of the polyhydric phenols to be used is 0.7 to 1.2 equivalents based on the epoxy group. An amount of lower than 0.7 equivalent or over 1.2 equivalents based on the epoxy group result in insufficient cure not achieving less hygroscopicity.

In case the resin composition of the present invention is to be cured, known curing promoters may be employed. Especially, in the application as semiconductor encapsulating materials, they should be employed for achieving a rapid cure. Exemplary curing promoters include organic phosphine compounds such as triphenyl phosphine, tri-4-methylphenyl phosphine, tri-4-methoxyphenyl phosphine, tributyl phosphine, trioctyl phosphine, tri-2-cyanoethyl phosphine, and the like; tertiary amines such as tributylamine, triethylamine, 1,8-diazabicyclo[5,4,0]undecen-7, triamylamine, and the like; quaternary ammonium salts such as ammonium benzyl trimethyl chloride, ammonium benzyl trimethyl hydroxide, triethylammonium tetraphenyl borate, and the like; and imidazoles, without being limited thereto. Among them, organic phosphine compounds, 1,8-diazabicyclo[5,4,0]undecen-7, and triethylammonium tetraphenyl borate are preferred from the standpoints of resistance to humidity and curability, inter alia, triphenyl phosphine is most preferred.

Furthermore, to the composition of the present invention, there may be added inorganic fillers. The fillers include silica, alumina, titanium white, aluminum hydroxide, talc, clay and glass fibers. Especially, silica and alumina are preferred. These may be used in a mixture of different shapes (sphere or crushed types) and different sizes to increase the filler content. The proportion of the inorganic fillers to be incorporated for use in encapsulating semiconductors is in the range of 25 to 90 % by weight, preferably 60 to 85 % by weight based on the total of the resin composition. A proportion less than 25 % by weight results in poor resistance to humidity, while a proportion higher than 90 % by weight results in problematic processability.

To the composition of the present invention, there may be added mold releasing agents such as naturally occurring waxes, synthetic waxes, higher fatty acids and metal salts thereof, or paraffins; coloring agents such as carbon black; surface treating agents such as silane coupling agents, and the like. In addition, flame retardants such as antimony trioxide, phosphorus compounds, brominated epoxy resins, and the like may be added. In order to achieving the flame retarding effects, the use of brominated epoxy resins is most preferred.

In order to reduce stresses imposed, various elastomers may be added or pre-reacted. Practically, one may make mention of additive or reactive type elastomers such as polybutadiene, butadiene-acrylonitrile copolymer, silicone rubbers, silicone oils, and the like.

With the resin composition of the present invention, resin-encapsulated semiconductor devices can be made by molding and curing in accordance with any one of known prior forming techniques such as transfer molding, compression molding, injection molding and the like.

The epoxy resin composition of the present invention as especially materials for encapsulating electronic parts have a lower hygroscopic property and a balance between the thermal resistance, curability and adhesiveness. The resin-encapsulated semiconductor devices produced with this composition are excellent in resistance to solder-cracking.

### Examples

The present invention will be illustrated with reference to the following Examples, without being limited thereto. In Examples, epoxy equivalent weight is defined as a molecular weight of an epoxy resin per epoxy group. The average number of repeating units was determined with GPC (TRIROTOR SR-II, available from NIPPON BUNKO KOGYO, Ltd).

Blends and cured shapes were evaluated as follows:

Gel time: 0.5 g of a blend obtained in Examples and Comparative Examples was placed on a recess of a hot plate at 180 °C and measured for the time period until gelled.

Glass transition temperature: Determination was effected using a thermomechanical analyzer (SHIMADZU DT-30).

Barcol hardness: Determination was made with a hard tester model 935 under the conditions of 175 °C/2 minutes according to ASTM D-648.

Flexural strength, flexural modulus: Determination was made with an Instron universal tester (SHIMADZU IS-10T) according to JIS K-6911.

Water absorbance: A variation in weight was measured at a temperature of 85 °C and a relative humidity of 85 % using a thermostat (TABAI PR-2) under a constant humidity.

Spiral flow: Conducted at a temperature of 175 °C and at 70 kg/cm according to EMMI-1-66.

Adhesion strength: A shape is transfered onto the surface of an aluminum foil and evaluated for the force required to peel off the shape.

Solder cracking property: A simulated IC (QFP package with 52 pins, a package thickness of 2.05 mm) was moistened under the conditions of a temperature of 85 °C and a relative humidity of 85 % for 72 hours, and immediately thereafter immersed in a soldering bath at 240 °C for 30 seconds, followed by counting the number of ICs having cracks generated. The number of tested ICs was ten.

### Referential Example 1

147.3 g of cyclohexanone were added to a reactor equipped with a thermometer, a stirrer, and a condenser, dissolved into 648.6 g of o-cresol, added with 600 g of concentrated hydrochloric acid, and stirred at 60 °C for 10 hours.

After the reaction was completed, toluene was added to produce a precipitate containing a condensate of o-cresol with cyclohexanone, and the precipitate was taken by filtration. The obtained precipitate was washed with water to remove hydrochloric acid, thereby giving bis (o-cresol) cyclohexane.

FD-MASS spectroscopy indicated that the product had a molecular weight of 296 and a melting point of 190 to 195 °C.

### Referential Example 2

In to a reactor equipped with a thermometer, a stirrer, and a condenser, 100 g of bis(o-cresol)cyclohexane obtained in Referential Example 1, 1.92 g of p-toluene sulfonic acid monohydrate and 150 g of methylisobutylketone were charged, and after dissolved, 8.15 g of a 37 % formalin were continuously added dropwise at a temperature of 80 °C for 10 minutes, and then the whole was kept at the same temperature for 6 hours as it was. After neutralizing with caustic soda, washing with water, and concentrating under reduced pressure, bis (o-cresol)cyclohexane novolak was obtained (this is referred to as CCN hereunder).

By FD-MASS spectroscopy, fragments of 296, 604, 912, and 1220 were detected. The average number of repeating units, n, determined by GPC was 0.68.

This product had an OH equivalent of 150g/eq. and a melting point of 100 °C .

### Referential Example 3

In to a reactor equipped with a thermometer, a stirrer, and a condenser, 100 g of bis(phenol)cyclohexane (available from SUMITOMO Chemical Co., Ltd, under the trade name of Antigen W), 1.92 g of p-toluene sulfonic acid monohydrate and 150 g of methylisobutylketone were added, and after dissolved, 8.15 g of a 37 % formalin were continuously added dropwise at a temperature of 80 °C for 10 minutes, and then the whole was kept at the same temperature for 6 hours as it was. After neutralizing with caustic soda, washing with water, and concentrating under reduced pressure, bis(phenol)cyclohexane novolak was obtained (this is referred to as PCN hereunder).

By FD-MASS spectroscopy, fragments of 268, 548, and 828 were detected. The average number of repeating units, n, determined by GPC was 0.53.

This product had an OH equivalent of 136g/eq. and a melting point of 101 °C.

### Examples 1 to 4

Using the polyhydric phenols obtained in the Referential Examples as described above (CCN and PCN) as curing agents, a glycidyl ether of o-cresol novolak (available from SUMITOMO Chemical Industry Co., Ltd, under the trade name of SUMI-EPOXY ESCN-195, an epoxy equivalent of 201g/eq., a content of hydrolyzable chlorine of 330 ppm) and a glycidyl ether of polyphenols obtained by condensation of phenols with hydroxybenzaldehyde (available from SUMITOMO Chemical Industry Co. Ltd. under the trade name of SUMI-EPOXY ESX-221, an epoxy equivalent of 213g/eq., a content of hydrolyzable chlorine of 200 ppm) as epoxy resins, triphenyl phosphine as curing accelerator, fused silica (available from Electric Chemical Industry Co. Ltd. under the trade name of FS-891) as filler, carnauba wax as mold releasing agent, and a coupling agent (available from TORAY DOW CORNING SILICONE under the trade name of SH-6040) were incorporated in amounts (g) as indicated in Table 1, heat-kneaded with a roll, and transfer molded.

Moreover, the moldings were post-cured for 5 hours in an oven at a temperature of 180 °C to produce cured shapes.

### Comparative Examples 1 to 2

Cured shapes were produced according to the identical procedure to that in the Examples, except that the phenol novolak (available from ARAKAWA Chemical Industry Co. Ltd. under the trade name of TAMANOL 759, an OH equivalent of 110g/eq.) was used as curing agent, The formulations are also recited in Table 1.

The cured shapes obtained in Examples and Comparative Examples were measured for glass transition temperature, water absorbance, flexural strength, flexural modulus. The results are set forth in Table 2.

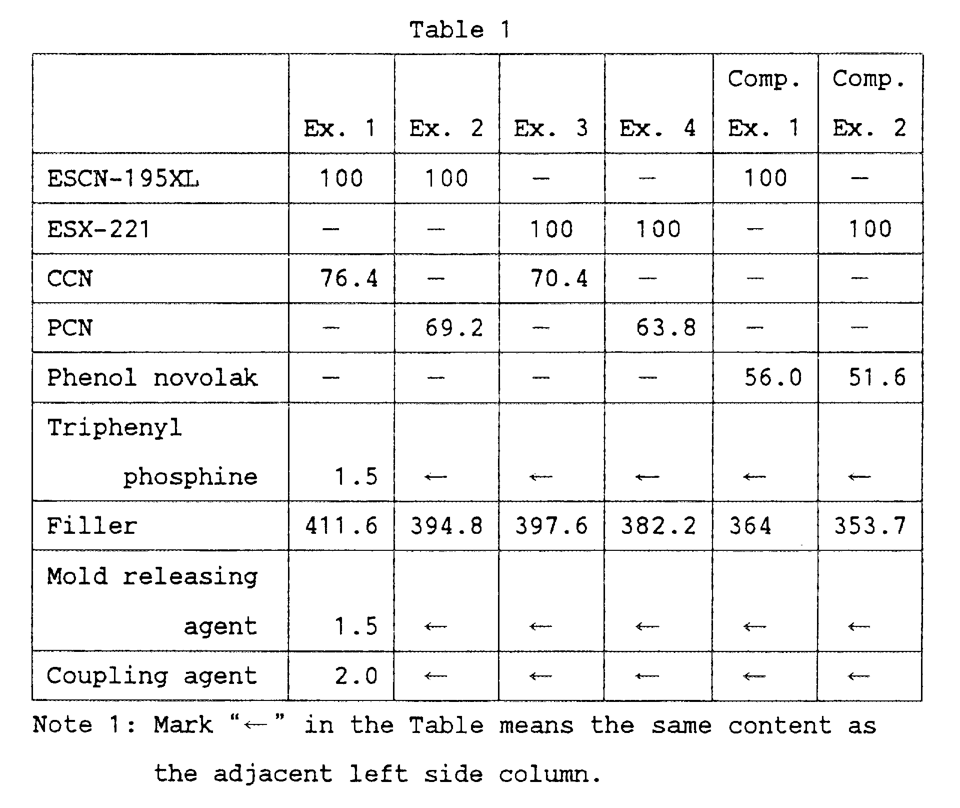

**Table 2**

| | Ex. 1 | Ex. 2 | Ex. 3 | Ex. 4 | Comp. Ex. 1 | Comp. Ex. 2 |
|---|---|---|---|---|---|---|
| Gell time (sec.) | 30 | 38 | 36 | 41 | 33 | 36 |
| Spiral flow (in) | 58 | 60 | 62 | 63 | 44 | 49 |
| Barcol hardness | | | | | | |
| (Barcol 935) | 40 | 58 | 40 | 70 | 78 | 82 |
| Glass transition | | | | | | |
| temp. (°C) | 140 | 150 | 169 | 185 | 155 | 185 |
| Flexural | | | | | | |
| strength (kg/mm) | 14 | 13 | 10 | 12 | 13 | 11 |
| Flexural | | | | | | |
| modulus (kg/mm) | 1470 | 1310 | 1220 | 1130 | 1410 | 1160 |
| Adhesive | | | | | | |
| strength (g/cm) | 400 | 460 | 690 | 400 | 300 | 200 |
| % Water | | | | | | |
| absorbance | | | | | | |
| 24 hrs. | 0.128 | 0.173 | 0.203 | 0.276 | 0.217 | 0.365 |
| 48 hrs. | 0.178 | 0.239 | 0.267 | 0.345 | 0.302 | 0.449 |
| 72 hrs. | 0.221 | 0.291 | 0.304 | 0.375 | 0.364 | 0.488 |
| Solder cracking | | | | | | |
| property | 1 | 2 | 0 | 1 | 10 | 5 |

## Claims

1. An epoxy resin composition comprising (a) an epoxy resin having at least two epoxy groups in a molecule and (b) a polyhydric phenol represented by the following general formula (1): 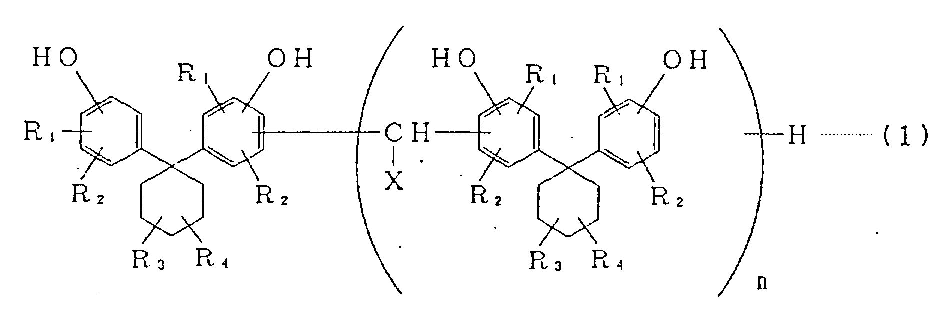 wherein R₁ to R₄ independently represent hydrogen, an alkyl having 1 to 9 carbon atoms, or a cycloalkyl group having 4 to 9 carbon atoms, or halogen, and X represents hydrogen, an alkyl group having 1 to 9 carbon atoms, cyclohexyl or an aryl group having 6 to 20 carbon atoms, and n represents an average number of repeating units of 0.1 to 10.

2. The epoxy resin composition according to Claim 1, wherein said (a) component is an o-cresol novolak epoxy resin or a glycidyl ether of polyhydric phenols obtained by condensation of phenols with aromatic carbonyl compounds.

3. The epoxy resin composition according to Claim 1, wherein said (b) component is a bis(o-cresol)cyclohexane or bis(o-phenol)cyclohexane novolak, and the average number of repeating units, n, is in the range of 0.1 to 5.

4. A resin-encapsulated semiconductor device produced by encapsulating a semiconductor device with the epoxy resin composition of Claim 1.

## Patentansprüche

1. Epoxyharzmasse, umfassend
(a) ein Epoxyharz mit mindestens zwei Epoxygruppen in einem Molekül und
(b) ein mehrwertiges Phenol der folgenden allgemeinen Formel (1) 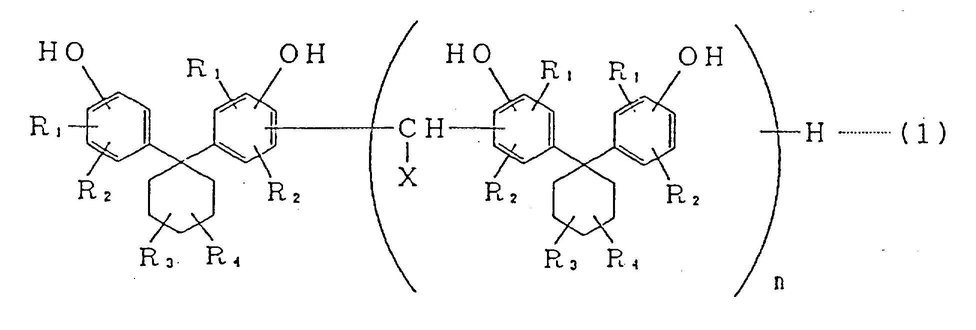
worin bedeuten:
R₁ bis R₄ unabhängig voneinander Wasserstoff, eine Alkylgruppe mit 1 bis 9 Kohlenstoffatom(en) oder eine Cycloalkylgruppe mit 4 bis 9 Kohlenstoffatomen oder Halogen und
X Wasserstoff, eine Alkylgruppe mit 1 bis 9 Kohlenstoffatom(en), eine Cyclohexylgruppe oder eine Arylgruppe mit 6 bis 20 Kohlenstoffatomen und
n eine Durchschnittszahl an wiederkehrenden Einheiten von 0,1 bis 10.

2. Epoxyharzmasse nach Anspruch 1, wobei die Komponente (a) aus einem o-Kresolnovolakepoxyharz oder einem Glycidylether von durch Kondensation von Phenolen mit aromatischen Carbonylverbindungen erhaltenen mehrwertigen Phenolen besteht.

3. Epoxyharzmasse nach Anspruch 1, wobei die Komponente (b) aus einem Bis(o-kresol)cyclohexan oder Bis(o-phenol)cyclohexannovolak besteht und die Durchschnittszahl an wiederkehrenden Einheiten n im Bereich von 0,1 bis 5 liegt.

4. Harzeingekapselte Halbleitervorrichtung, hergestellt durch Einkapseln einer Halbleitervorrichtung mit der Epoxyharzmasse von Anspruch 1.

## Revendications

1. Composition de résine époxyde comprenant (a) une résine époxyde ayant au moins deux groupes époxyde dans une molécule et (b) un phénol polyhydrique représenté par la formule générale suivante (1): 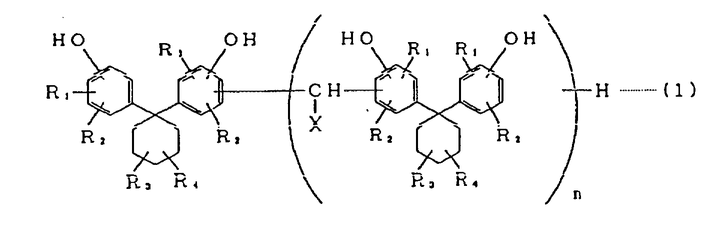 dans laquelle R₁ à R₄ représentent chacun d'une manière indépendante un hydrogène, un alkyle ayant de 1 à 9 atomes de carbone ou un groupe cycloalkyle ayant de 4 à 9 atomes de carbone, ou un halogène et X représente un hydrogène, un groupe alkyle ayant de 1 à 9 atomes de carbone, un cyclohexyle ou un groupe aryle ayant de 6 à 20 atomes de carbone et n représente un nombre moyen d'unités répétitives allant de 0,1 à 10.

2. Composition de résine époxyde selon la revendication 1, où ledit composant (a) est une résine époxyde-novolaque d'o-crésol ou un glycidyle éther de phénols polyhydriques obtenu par la condensation de phénols avec des composés carbonyle aromatiques.

3. Composition de résine époxyde selon la revendication 1, où ledit composant (b) est une novolaque de bis(o-crésol)cyclohexane ou de bis(o-phénol)cyclohexane, le nombre moyen des unités répétitives n se situant dans la gamme allant de 0,1 à 5.

4. Dispositif semi-conducteur encapsulé dans une résine produit par l'encapsulation d'un dispositif semi-conducteur avec une résine époxyde ayant la composition de la revendication 1.
